# EUROPÄISCHE PATENTSCHRIFT

(11) **EP 0 941 448 B1**
(45) Veröffentlichungstag und Bekanntmachung des Hinweises auf die Patenterteilung: **19.02.2003**
(21) Anmeldenummer: 97948718.8
(22) Anmeldetag: 06.11.1997
(51) Int. Cl.: G01B 9/02, G01D 5/26

(54) **VERFAHREN ZUM INTERFEROMETRISCHEN MESSEN VON POSITIONEN, POSITIONSÄNDERUNGEN UND DARAUS ABGELEITETER PHYSIKALISCHER GRÖSSEN**
INTERFEROMETRIC MEASUREMENT OF POSITIONS, POSITION CHANGES AND PHYSICAL QUANTITIES DERIVATED THEREFROM
METHODE DE MESURE INTERFEROMETRIQUE DE POSITIONS, DE VARIATIONS DE POSITION ET DES GRANDEURS PHYSIQUES DERIVEES

(30) Priorität: 06.12.1996 DE 19650703
(43) Veröffentlichungstag der Anmeldung: 15.09.1999
(73) Patentinhaber: ROBERT BOSCH GMBH, 70442 Stuttgart (DE)
(72) Erfinder: DRABAREK, Pawel, D-75233 Tiefenbronn (DE)
(86) Internationale Anmeldenummer: DE9702568
(87) Internationale Veröffentlichungsnummer: WO98025103

(56) Entgegenhaltungen:
- WO-A-89/12799
- US-A- 4 765 738
- LACHISH U ET AL: "TUNABLE DIODE LASER BASED SPECTROSCOPIC SYSTEM FOR AMMONIA DETECTION IN HUMAN RESPIRATION" REVIEW OF SCIENTIFIC INSTRUMENTS, Bd. 58, Nr. 6, Juni 1987, Seiten 923-927, XP002031160
- PIE-YAU CHIEN ET AL: "DISTANCE- AND VELOCITY-DETECTION INTERFEROMETER BY USING A FREQUENCY TRIANGULAR-MODULATED LASER DIODE" APPLIED OPTICS, Bd. 34, Nr. 16, 1.Juni 1995, Seiten 2853-2855, XP000506366
- ROOS P A ET AL: "LASER VIBROMETER BASED ON OPTICAL-FEEDBACK-INDUCED FREQUENCY MODULATION OF A SINGLE-MODE LASER DIODE" APPLIED OPTICS, Bd. 35, Nr. 34, 1.Dezember 1996, Seiten 6754-6761, XP000640860

## Beschreibung

### Stand der Technik

Die Erfindung bezieht sich auf ein Verfahren zum interferometrischen Messen von Positionen und Positionsänderungen sowie daraus abgeleiteter physikalischer Größen eines zu untersuchenden Teils mittels Heterodyn-Interferometrie, wobei zur Erzeugung der Heterodyn-Frequenz ein Laser zur Änderung der Frequenz der von ihm abgegebenen Strahlung mittels eines sich zeitlich ändernden, pulsierenden Injektionsstromes moduliert wird und die abgegebene Strahlung einerseits über einen optischen Umweg und andererseits ohne den optischen Umweg zu dem Teil und von dort zu einem Meßempfänger geführt wird,

Ein derartiges Verfahren ist in Verbindung mit verschiedenen optischen Anordnungen bekannt und geht z.B. aus der EP 0 420 897 B1 hervor. Zum Erzeugen der für die praktische meßtechnische Auswertung günstigen Heterodyn-Frequenz wird dabei die Frequenz der von dem Halbleiter-Laser (Laserdiode) abgegebenen Strahlung mittels eines sich zeitlich ändernden Injektionsstroms moduliert. Die von dem Laser abgegebene Strahlung wird in zwei Teilstrahlen aufgeteilt, wovon der eine über einen optischen Umweg und der andere ohne einen optischen Umweg zu dem zu untersuchenden Teil geführt wird. Der optische Umweg ist beispielsweise mittels Umlenkspiegeln oder einer Lichtleitarschleife realisiert. Einzelheiten zur heterodyn-interferometrischen Messung können dieser Druckschrift entnommen werden.

Es sind auch andere Aufbauten zur heterodyn-interferometrischen Messung von Positionen, Positionsänderungen, Drehwinkeln, Geschwindigkeiten und weiterer daraus abgeleiteter physikalischer Größen bekannt, wobei der optische Umweg auch mit einem Umweg-Prisma realisiert werden kann. Mit diesen Verfahren und Meßeinrichtungen können Positionen oder Wegunterschiede bzw. die daraus abgeleiteten Größen hochgenau (z.B. im nm-Bereich) gemessen werden. Zur Modulation des Lasers hat die Signalform des Injektionsstroms dieser bekannten Verfahren bzw. Meßeinrichtungen einen sinusförmigen, dreieckförmigen oder sägezahnförmigen Verlauf mit einer im Vergleich zur Pulsdauer flachen Anstiegsflanke, da nur derartige Signalformen als geeignet angesehen werden, um zuverlässige Meßergebnisse zu erhalten. Dabei liegt z.B. bei einer üblichen Heterodyn-Frequenz im MHz-Bereich eine typische Länge des optischen Umweges im Bereich einiger Dezimeter, z.B. 40 cm. Dieser relativ große optische Umweg steht dem Streben nach einer miniaturisierten Meßanordnung entgegen. Außerdem wird durch Vergrößerung der Länge des optischen Umweges der für die Meßauswertung erforderliche, möglichst hohe Kontrast des auszuwertenden Interferenzmusters ungünstigerweise verringert, wie sich z.B. aus der Kohärenzfunktion ergibt, die einen Abfall des Kontrastes mit zunehmender Länge des optischen Umweges ΔL in Form einer e-Funktion besitzt. Die Auswertung wird dabei durch Rückreflexe des optischen Systems auf die Laserdiode erschwert, wodurch die an sich monomode Arbeitsweise des Lasers multimodig wird, wobei ein peakartiger Verlauf der Kohärenzfunktion entsteht und die e-Funktion die Einhüllende ist und steiler abfällt als bei der monomoden Arbeitsweise. Um Rückreflexe zu vermeiden, muß dem Laser z.B. ein Isolator vorgeschaltet werden, wodurch zusätzlicher Aufwand entsteht.

Bei einem anderen Meßverfahren, nämlich einer spektroskopischen Messung von Atemluft, ist es aus Review of scientific instruments, Bd. 58, Nr. 6 Juni 1987, S. 923 - 927, Lachish et. a.: "Tunable diode laser based spectroscopic system for ammonia detection in human respiration" bekannt, einen Halbleiterlaser mittels eines rechteckförmigen Modulationsstroms anzusteuern, um ein Null-Signal während aufeinanderfolgender Lichtpulse zu erfassen. Dabei wird eine Tempe-raturstabilisierung des Halbleiterlasers vorgenommen.

In der US-A-4 765 738 ist vorgeschlagen, zur Messung der Frequenzantwort eines optischen Empfangssystems eine Heterodynfrequenz mittels einer Laserdiode und eines optischen Umwegs zu erzeugen, wobei zur Ansteuerung eines Halbleiterlasers u. a. eine rechteckförmige Modulation des Injektionsstroms vorgenommen wird. Dabei sollen Frequenzen bis zu 10 GHz gemessen werden. Es ist eine Lichtleitfaserlänge von 20 km angegeben.

### Vorteile der Erfindung

Der Erfindung liegt die Aufgabe zugrunde, das eingangs angegebene Verfahren derart weiterzubilden, daß bei Verbesserung der Meßergebnisse ein geringerer Aufwand beim Aufbau der Meßeinrichtung und eine Miniaturisierung ermöglicht werden.

Diese Aufgabe wird mit den Merkmalen des Anspruches 1 gelöst. Hiernach ist also vorgesehen, daß die Signalform des Injektionsstroms eine relativ zu seiner Pulslänge steile Anstiegsflanke sowie ein daran anschließendes Plateau aufweist. Es hat sich überraschend gezeigt, daß sich mit dieser der bei Messungen der vorliegenden Art üblichen Ansteuerungsweise des Lasers zur Frequenzänderung der abgegebenen Strahlung zuwiderlaufenden Ansteuerung mit dem die steilen Anstiegsflanken aufweisenden Injektionsstrom und dem anschließenden Plateau eine verbesserte heterodyn-interferometrische Messung ergibt, wobei die optische Weglänge bis unter 1 cm verringert werden kann. Dadurch kann gemäß der Kohärenzfunktion der Kontrast des Interferenzsignals erheblich verbessert werden, wodurch auch das Meßsignal besser auswertbar wird. Gleichzeitig wird die Abmessung des Systems wesentlich kleiner, und es kann z.B. ein wesentlich kleineres Umweg-Prisma zur Miniaturisierung der Meßeinrichtung eingesetzt werden. Dies ist beispielsweise bei mehrdimensionaler Messung mit mehreren Meßkanälen, wie bei einem mehrachsigen Vibrometer, ein wesentlicher Vorteil. Ein Testaufbau hat gezeigt, daß die Abmessungen gegenüber bisherigen derartigen Meßeinrichtungen um ein Vielfaches verringert werden können. Als weiterer Vorteil kann das System unempfindlich gegen Rückreflexe gemacht werden, wobei die Länge des optischen Umweges innerhalb enger Toleranzen genau festgelegt wird, so daß auch bei einem multimodigen Interferenz-Signal im Bereich eines Peaks der Kohärenzfunktion genaue Auswertungen erhalten werden, ohne daß aufwendige Maßnahmen zur Unterdrückung der Rückreflexe getroffen werden müssen. Die Einhaltung der engen Toleranzen des optischen Umweges sind bei der geringeren Gesamtlänge des optischen Umweges, die z.B. im Bereich 1 mm liegt, relativ einfach möglich. Um während der steilen Flanke der Pulse auftretende Instabilitäten des Interferenzsignals bei der Auswertung zu beseitigen, ist weiterhin vorteilhaft vorgesehen, daß die Auswertung des in einem photoelektrischen Wandler des Meßempfängers umgewandelten Signals erst verzögert nach Auftreten der Flanke des Injektionsstroms während des Plateaus erfolgt.

Eine einfache Signalform besteht z.B. in rechteckförmigen Pulsen des Injektionsstromes, wodurch eine im Vergleich zur gesamten Pulslänge äußerst steile Flanke erreicht wird. Relativ steile Flanken der Signalform im Vergleich zur Pulslänge können aber auch z.B. durch trapezförmige, an den Flanken sinusförmige oder ähnliche Pulsformen mit Plateau erreicht werden.

Eine vorteilhafte Betriebsart besteht darin, daß der Injektionsstrom zwischen einem minimalen Wert unterhalb des Schwellstromes des Lasers und einem oberhalb des Schwellstromes liegenden maximalen Wert pulsiert. Auf diese Weise wird in den Pausen zwischen den Pulsen von dem Laser keine Strahlung abgegeben. Alternativ kann vorgesehen sein, daß der Injektionsstrom zwischen einem minimalen Wert oberhalb des Schwellstromes des Lasers und einem darüber liegenden maximalen Wert pulsiert. Bei dieser Betriebsart wird von dem Laser fortlaufend eine Strahlung abgegeben, deren Frequenz variiert.

Das Verfahren kann vorteilhaft in der Weise angewendet werden, daß mehrere solcher Lasersignale im Zeitmultiplexbetrieb zum Bilden mehrerer Meßkanäle zueinander in Beziehung gebracht werden. wobei die Heterodynsignale der verschiedenen Meßkanäle in sich nicht überlappenden Zeitfenstern erzeugt werden. Dabei können die verschiedenen Kanäle entsprechend dem Multiplexbetrieb in der Auswerteschaltung leicht getrennt ausgewertet werden. Dabei ist es für den einfachen Aufbau und die einfache Auswertung vorteilhaft, wenn vorgesehen ist, daß die für die verschiedenen Meßkanäle gebildeten Laser-Ansteuersignale von einer gemeinsamen Ansteuerschaltung geliefert werden und den Meßkanälen jeweils zugeordnete Laserdioden vorgesehen sind und daß ein den Meßkanälen gemeinsamer photoelektrischer Umsetzer vorgesehen ist, von dem entsprechend dem Zeitmultiplexbetrieb die erfaßten Signale abgenommen und in einer anschließenden Auswerteschaltung getrennt nach den Meßkanälen ausgewertet werden.

Eine wichtige Anwendung besteht weiterhin darin, daß die Meßkanäle verschiedenen Dimensionen zugeordnet sind. Mittels der Auswerteschaltung können somit die Positionen bzw. Positionsänderungen über der Zeit, wie z.B. bei einem mehrachsigen Vibrometer, leicht erfaßt und ausgewertet werden.

Die Erfindung wird nachfolgend anhand der Zeichnungen weiter erläutert. Es zeigen:
- Fig. 1: einen zeitlichen Verlauf des Injektionsstromes für eine erste Betriebsart,
- Fig. 2: einen zeitlichen Verlauf des Injektionsstromes bei einer zweiten Betriebsart,
- Fig. 3: ein Zeitmultiplex-Heterodyn-Verfahren und
- Fig. 4: die Signalform des Injektionsstromes eines Meßkanals bei dem Zeitmultiplex-Heterodyn-Verfahren gem. Fig. 3.

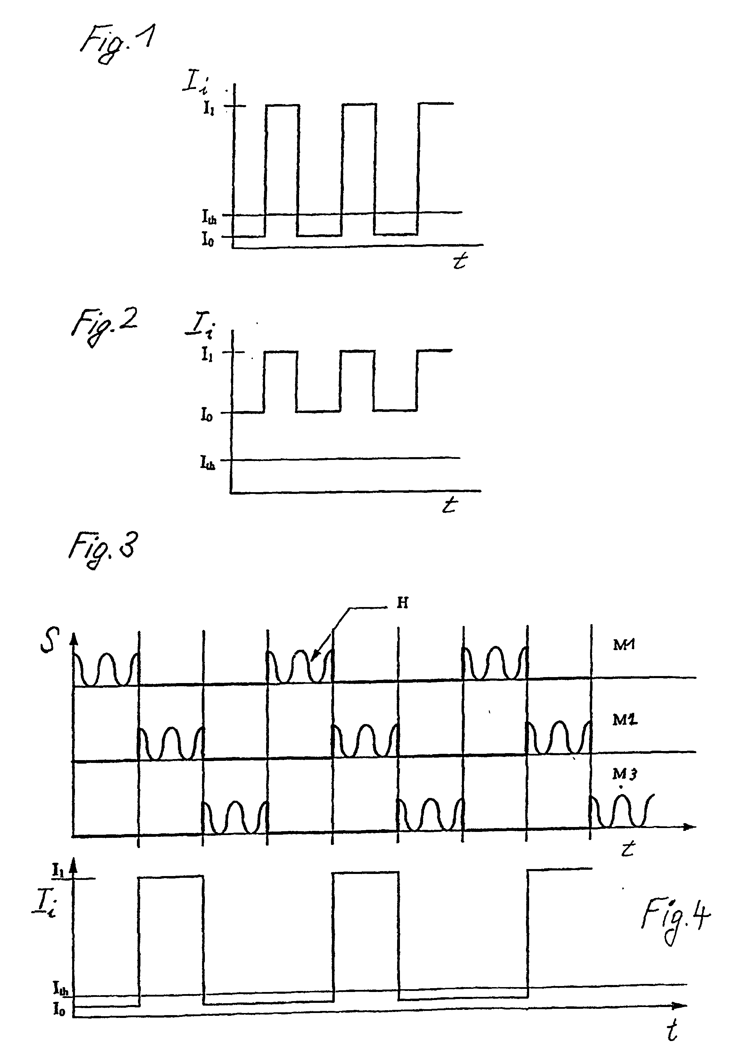

In Fig. 1 ist der Verlauf eines Injektionsstromes Iᵢ über der Zeit t dargestellt. Der Injektionsstrom Iᵢ besitzt eine rechteckförmige Signalform, d.h. insbesondere eine steile Anstiegsflanke und ein anschließendes Plateau pro Puls. Das Maximum des Injektionsstromes Iᵢ liegt bei einem Wert I₁ oberhalb eines Schwellstromes Iₜₕ einer Laserdiode, während der minimale Injektionsstrom I₀ unterhalb des Schwellstroms Iₜₕ liegt. Mit diesem rechteckförmig modulierten Injektionsstrom Iᵢ ergibt sich eine zur Erzeugung der Heterodyn-Frequenz überraschend gut geeignete Frequenzverschiebung des Lasers, wobei zur Bildung der zur Erzeugung der Heterodyn-Frequenz notwendigen Phasenverschiebung zwischen einem ersten und zweiten, aus der von dem Laser abgegebenen Strahlung gebildeten Teilstrahl ein kurzer optischer Umweg im Bereich von mm bereits ausreicht.

Zum Aufbau der gesamten Meßanordnung für das Heterodyn-Verfahren mittels des frequenzmodulierten Lasers und des optischen Umweges sei auf die eingangs genannte EP 0 420 897 B1 sowie auf den bekannten weiteren Stand der Technik zu diesen Meßanordnungen hingewiesen, wobei auch optische Umwege in Form von Umweg-Prismen bekannt sind. Bei den derartigen bekannten Meßanordnungen zum Heterodyn-Verfahren läßt sich die vorliegende erfindungsgemäße Modulation des Lasers anwenden und damit die Länge des optischen Umweges wesentlich verringern, so daß sich nicht nur ein wesentlich kompakterer Aufbau, sondern auch eine Verbesserung der Meßauswertung bei derartigen Meßanordnungen erzielen läßt.

In Fig. 2 ist ebenfalls ein rechteckförmig modulierter Injektionsstrom Iᵢ gezeigt, wobei im Gegensatz zur Fig. 1 der minimale Injektionsstrom I₀ jedoch oberhalb des Schwellstromes Iₜₕ liegt, so daß auch in den Pulspausen vom Laser Strahlung abgegeben wird, die jedoch gegenüber der während des Rechteck-Impulses abgegebenen Strahlung in der Frequenz verschoben ist.

Fig. 3 zeigt den zeitlichen Verlauf von Heterodyn-Signalen H in z.B. drei verschiedenen Meßdimensionen M1, M2, M3 zugeordneten Meßkanälen bei einem Zeitmultiplex-Heterodyn-Verfahren. Die Heterodyn-Signale H treten dabei in separaten Zeitfenstern auf und können aufgrund dieser separaten Zeitfenster den jeweiligen Meßrichtungen M1, M2, M3 bei der Auswertung eindeutig zugeordnet werden. Beispielsweise können die Dauern der Zeitmeßfenster im Bereich von µs liegen. In Fig. 4 ist beispielsweise der modulierte Injektionsstrom Iᵢ für die zweite Meßdimension M2 wiedergegeben. Das Heterodyn-Signal H für die zweite Meßdimension M2 bzw. zweite Meßrichtung wird demgemäß während der Dauer des Rechteck-Impulses gebildet. Der rechteckförmige Verlauf des Injektionsstromes Iᵢ geschieht hierbei nach der in Fig. 1 gezeigten ersten Betriebsart, wobei der minimale Injektionsstrom I₀ unterhalb des Schwellstromes Iₜₕ liegt, um während der Pausen die Abgabe einer Strahlung für diese Meßrichtung M2 zu vermeiden, so daß eine eindeutige Zuordnung in der Auswerteschaltung zu der Meßrichtung M2 auf einfache Weise erfolgen kann.

Bei einer Meßanordnung für das Zeitmultiplex-Heterodyn-Verfahren nach den Fig. 3 und 4 sind jeder Meßrichtung M1, M2, M3 bzw. jedem Meßkanal separate Laserdioden zugeordnet, die entsprechend dem Zeitmultiplex-Betrieb mit dem jeweiligen Injektionsstrom Iᵢ mit den zeitversetzten Impulsen angesteuert werden. Beim Meßempfänger braucht nur ein photoelektrischer Umsetzer, z.B. eine Photodiode, vorgesehen zu sein, deren Ausgangssignal entsprechend dem Zeitmultiplex-Betrieb den verschiedenen Meßrichtungen M1, M2, M3 zugeordnet wird.

Vorteilhaft läßt sich ein derartiges Zeitmultiplex-Heterodyn-Verfahren für mehrere Meßrichtungen in einem mehrachsigen Vibrometer anwenden, wobei die Abmessungen des Aufbaus äußerst klein gehalten werden können.

Mit dem Zeitmultiplex-Heterodyn-Verfahren kann eine simultane Messung mehrerer physikalischer Größen auch in anderen Anwendungsfällen, z.B. bei einem 2-Lambda-lnterferometer für Formmessung, realisiert werden. Es brauchen lediglich entsprechend viele Meßkanäle vorgesehen zu werden.

## Patentansprüche

1. Verfahren zum interferometrischen Messen von Positionen und Positionsänderungen sowie daraus abgeleiteter physikalischer Größen eines zu untersuchenden Teils mittels Heterodyn-Interferometrie, wobei zur Erzeugung der Heterodyn-Frequenz ein Laser zur Änderung der Frequenz der von ihm abgegebenen Strahlung mittels eines sich zeitlich ändernden, pulsierenden Injektionsstromes moduliert wird und die abgegebene Strahlung einerseits über einen optischen Umweg und andererseits ohne den optischen Umweg zu dem Teil und von dort zu einem Meßempfänger geführt wird,
**dadurch gekennzeichnet,**
**daß** die Signalform des Injektionsstroms eine relativ zu seiner Pulslänge steile Anstiegsflanke sowie ein daran anschließendes Plateau aufweist und
**daß** die Auswertung des in einem photoelektrischen Wandler des Meßempfängers umgewandelten Signals erst verzögert nach Auftreten der Flanke des Injektionsstroms während des Plateaus erfolgt.

2. Verfahren nach Anspruch 1,
**dadurch gekennzeichnet,**
**daß** die Signalform trapezförmig, an den Flanken sinusförmig oder im wesentlichen rechteckförmig ist.

3. Verfahren nach Anspruch 1 oder 2,
**dadurch gekennzeichnet,**
**daß** der Injektionsstrom zwischen einem minimalen Wert unterhalb des Schwellstromes des Lasers und einem oberhalb des Schwellstromes liegenden maximalen Wert pulsiert.

4. Verfahren nach Anspruch 1 oder 2,
**dadurch gekennzeichnet,**
**daß** der Injektionsstrom zwischen einem minimalen Wert oberhalb des Schwellwertes des Lasers und einem darüber liegenden maximalen Wert pulsiert.

5. Anwendung des Verfahrens nach einem der Ansprüche 1 bis 3 oder 5,
**dadurch gekennzeichnet,**
**daß** mehrere solcher Lasersignale im Zeitmultiplexbetrieb zum Bilden mehrerer Meßkanäle zueinander in Beziehung gebracht werden, wobei die Heterodynsignale der verschiedenen Meßkanäle in sich nicht überlappenden Zeitfenstern erzeugt werden.

6. Anwendung nach Anspruch 6,
**dadurch gekennzeichnet,**
**daß** die für die verschiedenen Meßkanäle gebildeten Laser-Ansteuersignale von einer gemeinsamen Ansteuerschaltung geliefert werden und den Meßkanälen jeweils zugeordnete Laserdioden vorgesehen sind und
**daß** ein den Meßkanälen gemeinsamer photoelektrischer Umsetzer vorgesehen ist, von dem entsprechend dem Zeitmultiplexbetrieb die erfaßten Signale abgenommen und in einer anschließenden Auswerteschaltung getrennt nach den Meßkanälen ausgewertet werden.

7. Anwendung nach Anspruch 6 oder 7,
**dadurch gekennzeichnet,**
**daß** die Meßkanäle verschiedenen Dimensionen zugeordnet sind.

8. Vibrometer, das nach dem Verfahren gemäß den Ansprüchen 1 bis 6 arbeitet und bei dem mehrere Meßkanäle gemäß den Ansprüchen 7 und 8 vorgesehen sind.

## Claims

1. Method for interferometric measurement of positions and position changes as well as physical variables derived from them for a part to be investigated by means of heterodyne interferometry, with the heterodyne frequency being produced by modulating a laser by means of a pulsating injection current, which varies with time, in order to change the frequency of the radiation emitted from this laser, and the emitted radiation being passed firstly via an optical circuitous route to the part, and secondly, without passing over the optical circuitous route, to the part, and being passed from there to a measurement receiver,
**characterized**
**in that** the signal form of the injection current has a rising flank, which is steep in comparison to its pulse length, as well as a plateau following this,
and
**in that** the evaluation of the signal which is converted in a photoelectric transducer of the measurement receiver is carried out only after a delay, after the occurrence of the flank of the injection current during the plateau.

2. Method according to Claim 1,
**characterized**
**in that** the signal form is trapezoidal, and is sinusoidal or essentially rectangular on the flanks.

3. Method according to Claim 1 or 2,
**characterized**
**in that** the injection current pulsates between a minimum value below the threshold current of the laser, and a maximum value which is above the threshold current.

4. Method according to Claim 1 or 2,
**characterized**
**in that** the injection current pulsates between a minimum value above the threshold value of the laser, and a maximum value greater than this minimum value.

5. Use of the method according to one of Claims 1 to 3 or 5,
**characterized**
**in that** a number of such laser signals are related to one another using the time-division multiplex mode to form a number of measurement channels, with the heterodyne signals on the various measurement channels being produced in time windows which do not overlap.

6. Use according to Claim 6,
**characterized**
**in that** the laser drive signals which are formed for the various measurement channels are supplied from a common drive circuit, and the measurement channels are each provided with associated laser diodes, and in that a photoelectric converter is provided, which is shared by the measurement channels and from which the detected signals are tapped off in accordance with the time-division multiplex mode and are evaluated in a subsequent evaluation circuit, separated on the basis of the measurement channels.

7. Use according to Claim 6 or 7,
**characterized**
**in that** the measurement channels are associated with different dimensions.

8. Vibrometer, which operates on the principle of the method according to Claims 1 to 6, and in which a number of measurement channels are provided according to Claims 7 and 8.

## Revendications

1. Procédé de mesure interférométrique des positions et variations de position ainsi que de grandeurs physiques qui en sont déduites pour une pièce analysée par interférométrie hétérodyne, selon lequel
pour générer la fréquence hétérodyne on module un laser pour changer la fréquence du rayonnement qu'il émet, à l'aide d'un courant d'injection pulsé, variant dans le temps et
on conduit le rayonnement émis d'une part suivant un détour de chemin optique et d'autre part sans détour optique sur la pièce et de là on reçoit le rayonnement dans un récepteur de mesure,
**caractérisé en ce que**
- la forme du signal du courant d'injection présente un flanc montant raide par rapport à la longueur de l'impulsion, ce flanc étant suivi d'un plateau ; et
- l'exploitation du signal converti dans un convertisseur photoélectrique du récepteur de mesure est seulement retardée après l'arrivée du flanc du courant d'injection pendant la durée du plateau.

2. Procédé selon la revendication 1,
**caractérisé en ce que**
le signe a une forme trapézoïdale avec des flanc de forme sinusoïdale ou essentiellement rectangulaire.

3. Procédé selon les revendications 1 ou 2,
**caractérisé en ce que**
le courant d'injection est pulsé entre une valeur minimale en dessous du courant de seuil du laser et une valeur maximale située au dessus du seuil du courant.

4. Procédé selon les revendications 1 ou 2,
**caractérisé en ce que**
le courant d'injection est pulsé entre une valeur minimale au dessus du seuil du laser et une valeur maximale située en dessous.

5. Application du procédé selon l'une des revendications 1 à 4,
**caractérisée en ce qu'**
on met en relation plusieurs tels signaux laser selon un mode multiplexé dans le temps pour former plusieurs canaux de mesure et on génère des signaux hétérodyne pour les différents canaux de mesure qui se trouvent dans des fenêtres de temps sans chevauchement.

6. Application selon la revendication 5,
**caractérisé en ce que**
les signaux de commande du laser formés pour les différents canaux de mesure sont fournis par un circuit de commande commun et des diodes laser sont associées à chacun des canaux de mesure ; et
un convertisseur photoélectrique est commun aux canaux de mesure pour fournir les signaux saisis en mode multiplexé dans le temps et les appliquer séparément suivant les canaux de mesure à un circuit d'exploitation en aval.

7. Application selon les revendications 5 et 6,
**caractérisée en ce que**
les canaux de mesure sont associés à différentes dimensions.

8. Vibromètre mettant en oeuvre le procédé selon l'une des revendications 1 à 4, et ayant plusieurs canaux de mesure selon les revendications 6 et 7.
